# EUROPEAN PATENT SPECIFICATION

(11) **EP 4 429 869 B1**
(45) Date of publication and mention of the grant of the patent: **29.04.2026**
(21) Application number: 22817146.8
(22) Date of filing: 09.11.2022
(51) Int. Cl.: B29C 53/56, B29C 70/32, B29C 70/44, B29C 70/54

(54) **METHOD FOR INJECTING RESIN AND DEVICE FOR HOLDING A FIBER TEXTURE ON AN IMPREGNATION MANDREL OF A WINDING MACHINE**
VERFAHREN ZUM EINSPRITZEN VON HARZ UND VORRICHTUNG ZUM HALTEN EINER FASERTEXTUR AUF EINEM IMPRÄGNIERDORN EINER WICKELMASCHINE
PROCÉDÉ D'INJECTION DE RÉSINE ET DISPOSITIF DE MAINTIEN D'UNE TEXTURE FIBREUSE SUR UN MANDRIN D'IMPRÉGNATION D'UNE MACHINE D'ENROULEMENT

(30) Priority: 09.11.2021 US 202163277307 P
(43) Date of publication of application: 18.09.2024
(73) Proprietor: SAFRAN AIRCRAFT ENGINES, 75015 Paris (FR)
(72) Inventor: FABRE, Hubert, Jean Marie, 77550 MOISSY-CRAMAYEL (FR); GUILLOT, Maxime, 77550 MOISSY-CRAMAYEL (FR)
(74) Representative: Cabinet Beau de Loménie
(86) International application number: PCT/EP2022/081216
(87) International publication number: WO 2023/083841

(56) References cited:
- WO-A1-2022/246160
- DE-A1- 102008 028 441
- US-B2- 9 889 611

## Description

### Background of the invention

The present invention relates to the general field of the production of gas turbine casings made of composite material, and more particularly of retention casings for a gas turbine fan for aeronautical engines.

In an aeronautical gas turbine engine, a fan casing performs several functions: it defines the air inlet flow section for the flow of air into the engine, supports an abradable material facing the tip of the fan blades, supports a possible sound wave absorbing structure for the acoustic treatment at the inlet to the engine and incorporates or supports a retention shield. The latter constitutes a trap retaining the debris, such as ingested objects or fragments of damaged blades, projected by centrifugation, so as to prevent them from passing through the casing and reaching other portions of the aircraft.

The production of a fan casing made of composite material is known per se. Reference may for example be made to document EP 1 961 923 which describes the manufacture of a casing made of composite material with varying thickness comprising the formation of a fiber reinforcement by superimposed layers of a fiber texture and the densification of the fiber reinforcement by a polymer matrix. More specifically, this document provides using a drum (hereinafter called storage mandrel) for the three-dimensional weaving of the fiber texture, the latter then being wound in superimposed layers on the mandrel of a resin injection mold (hereinafter called impregnation mandrel) having an external surface whose profile corresponds to that of the central portion of the casing to be manufactured and two side flanges corresponding to fastening clamps of the casing. The fiber preform thus obtained being held on the impregnation mandrel, an impregnation is then carried out with a resin. To this end, an envelope forming a counter-mold is applied on the fiber preform and the resin is injected into the closed assembly thus consituted by this envelope and the impregnation mandrel. The impregnation can be assisted by establishing a pressure difference between the interior and the exterior of the mold in which the fiber preform is located. After impregnation, a step of polymerizing the resin by heating the mold is carried out. The part finally obtained can then be unmolded and trimmed to remove excess resin and form the desired casing.

With such an embodiment, there is the problem of holding the fiber texture on the impregnation mandrel at the start of winding but also and especially at the end of winding where, before being cut to its final length and being impregnated with resin, the fiber preform must be held while avoiding losing the tension applied to the texture during its winding.

The application EP 2 771 172 has solved this problem of holding the fiber texture on the impregnation mandrel at the start and at the end of winding by proposing a removable device fastened on the side flanges of the impregnation mandrel of the winding machine and which is provided with blocks intended to bear against the central portions and ends of the fiber texture and on which a clamping (or pinching) force is exerted to hold the layer of fiber texture wound on the impregnation mandrel.

However, at the end of winding, during the removal of the blocks and the closing of the counter-molds prior to the injection of the resin, a slip is created at the outer or upper layer, the last layer of the fiber texture which by leaving a cavity in the closed mold, will create a resin-rich area likely to lead to a rejection of the final part once unmolded.

DE 10 2008 028441 A1 discloses a method according to the preamble of claim 1 and US 9 889 611 B2 discloses a device according to the preamble of claim 5.

### Object and summary of the invention

The main aim of the present invention is therefore to overcome the aforementioned drawback by proposing an improved resin injection method associated with a holding device which prevents any displacement of the preform prior to the closing of the injection mold. One aim of the invention is also to ensure better adhesion between the layers of the fiber texture. Another aim is to allow better control of the dimensions and weight of the preform.

These aims are achieved by a method for injecting an impregnation resin for the manufacture of a revolution part made of composite material in which several clamping blocks are bearing on a fiber texture wound on an impregnation mandrel forming an injection mold for its holding during the cutting of the last layer of the fiber texture in an end-of-winding position, characterized in that the fiber texture is heated before the removal of the clamping blocks and the closing of the mold to inject the impregnation resin therein, and in that the closing of the mold is preceded by the installation of a compaction membrane.

Thus, by heating the fiber texture before the closing of the mold, this fiber texture is stiffened and is allowed to adhere to the previous winding turn. The absence of slip further allows optimizing the cutting and therefore better controlling the weight of the preform.

Preferably, a thin layer of the impregnation resin is applied on the fiber texture before the bearing of the clamping blocks and the heating of the fiber texture.

Advantageously, the thin layer of the impregnation resin is applied by spraying or whitewash.

Preferably, the percentage of applied impregnation resin represents less than 3% of the total of the impregnation resin injected into the mold.

The closing of the mold is preceded by the installation of a compaction membrane.

The invention also relates to a device for holding a fiber texture on an impregnation mandrel forming an injection mold, comprising:
a cross-member forming a support, each end of which is intended to be fastened on one of the side flanges of the impregnation mandrel;
at least one central block holder mounted on the cross-member and provided with a front clamping block and at least one side block holder mounted on the cross-member and provided with at least one side clamping block; characterized in that it further comprises:
   a heating pad interposed between each front clamping block and the layer of fiber texture wound on the impregnation mandrel;
   means for exerting a clamping force of the front clamping blocks on the layer of fiber texture wound on the impregnation mandrel via the heating pads; and
   a compaction membrane disposed on the layer of fiber texture before the closing of the mold.

Advantageously, the holding device further comprises a spraying module intended to spray a thin layer of the impregnation resin onto the fiber texture, before the bearing of the clamping blocks and the heating of the fiber texture by the heating pads.

Preferably, the heating pads and the front clamping blocks form one and the same part.

The holding device further comprises a compaction membrane disposed on the layer of fiber texture before the closing of its mold.

Finally, the invention relates to a winding machine including an impregnation mandrel on which the fiber texture stored on a storage mandrel is intended to be wound in superimposed layers, and at least one holding device as mentioned above.

### Brief description of the drawings

Other characteristics and advantages of the present invention will emerge from the description given below, with reference to the appended drawings which illustrate an exemplary embodiment thereof without any limiting nature. In the figures:
- Figure 1 is a view of a holding device according to the invention mounted on an impregnation mandrel of a fiber texture winding machine;
- Figures 2A, 2B, 2C and 2D illustrate the different steps of implementation of a resin injection method according to the invention by means of the holding device of Figure 1.

### Detailed description of one embodiment

The invention will be described below in the context of its application to the manufacture of a fan casing for an aeronautical gas turbine engine. The casing is made of composite material with fiber reinforcement densified by a matrix. The reinforcement is made of fibers, for example carbon, glass, aramid or ceramic fibers, and the matrix is made of polymer, for example epoxy, bismaleimide or polyimide polymer.

The invention applies to any type of winding machine whose function is to allow automated transfer of the fiber texture stored on a storage mandrel to an impregnation mandrel of the resin injection mold.

Briefly, such a winding machine comprises a frame supporting in particular the storage mandrel and the impregnation mandrel. The storage mandrel which receives the fiber texture is carried by a horizontal axis driven in rotation by an electric motor and along which it can be translated relative to the frame to perform an alignment of this mandrel on the impregnation mandrel during the winding of the fiber texture on the impregnation mandrel. The impregnation mandrel which is intended to receive in superimposed layers the fiber texture stored on the storage mandrel has an external surface whose profile corresponds to that of the inner surface of the casing to be produced and two side flanges whose profiles correspond to those of the outer clamps of the casing at its upstream and downstream ends in order to allow its mounting and its connection with other elements. However, it is possible in the case of an intermediate casing shroud (VCI) to have only one clamp. The impregnation mandrel is carried by a horizontal axis which is also parallel to the axis of rotation of the storage mandrel and just like it driven in rotation by an electric motor. A control unit connected to these two electric motors allows controlling and monitoring the rotational speed of each mandrel as well as all the operating parameters of the winding machine.

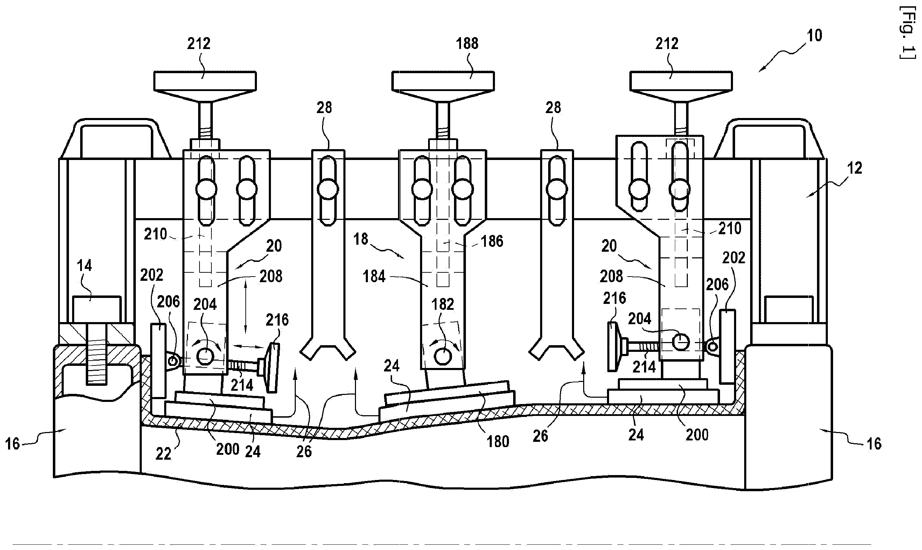

Figure 1 shows an example of a removable holding device positioned at the start of winding at a predetermined angular position on the impregnation mandrel and ensuring the fastening of the free end of the fiber texture of the storage mandrel on the impregnation mandrel. At the end of winding, it is also used to hold the fiber texture on the impregnation mandrel before it is cut to its final length.

This removable holding device 10 comprises in particular a cross-member 12 forming a support whose both ends are fastened, for example by means of screws 14, on the side flanges of an impregnation mandrel 16. In the example illustrated, which cannot be limiting, the cross-member 12 supports three block holders; namely a central block holder 18 (but a configuration with two or even three or four block holders is also possible depending on the width of the mandrel) and two side block holders 20 (or even only one in the case of a VCI).

The central block holder 18, when it is unique as illustrated, is more specifically positioned substantially equidistant from the two side flanges of the impregnation mandrel 16. It comprises a front clamping block (or clamp 180) preferably carried by a pivot link 182 on a block holder 184 itself fastened on the cross-member 12 (but a rigid link of the slide type integrating a height adjustment and compaction function can also be envisaged, in particular for the flat or low slope areas). The central block holder 18 also comprises a screw-nut system composed of a worm screw 186 operable by a crank 188 and secured to the block holder 184. By pivoting the crank 188, it is thus possible to lower or raise the front clamping block 180 relative to the cross-member 12, and therefore to more or less clamp the block on the fiber texture layer 22.

Likewise, each side block holder 20 comprises a side clamping block 202 and also optionally a front clamping block 200 preferably carried respectively by a rigid link 206 and a pivot link 204, on a block holder 208 itself fastened on the cross-member 12 and a screw-nut system composed of a worm screw 210 operable by a clamping crank 212 and secured to the block holder 208 allows, when present, lowering or raising the front clamping block 200 relative to the cross-member 12, and therefore clamping more or less the block on the layer of fiber texture 22. The side clamping block 202 is also adjustable by means of a screw-nut system composed of a worm screw 214 secured to the block holder 208 and operable by a side clamping crank 216. By pivoting this crank 216, it is thus possible to laterally move the side clamping block 202 relative to the side flange of the impregnation mandrel 16, and therefore clamp more or less this side clamping block on the vertical side edge of the fiber texture layer 22 (as these screw-nut systems like any other similar means are able to exert this clamping force of the blocks, can of course be motorized).

In accordance with the invention, a heating pad 24 is advantageously interposed between each front block 180, 200 and the fiber texture layer 22 wound on the impregnation mandrel 16. The presence of this heating pad ensures a heating of the fiber texture at the end of winding, which has the effect of making it cardboard and thus ensuring better adhesion of the tackifier which is generally spread between the last two layers of this fiber texture.

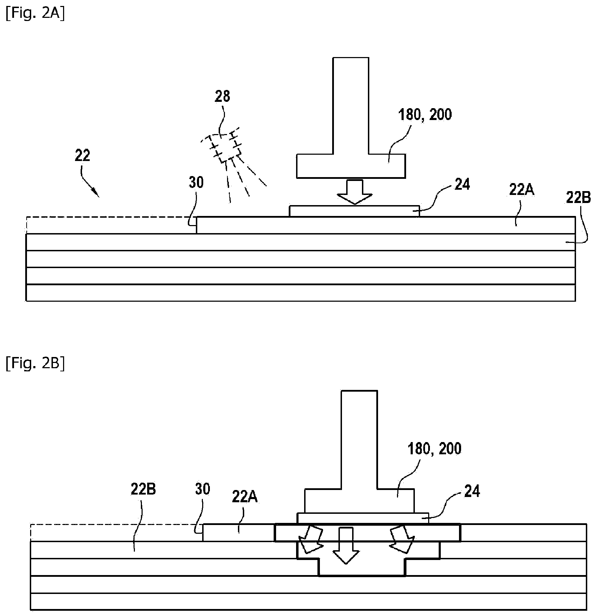

In conjunction with Figures 2A to 2D, the process of cutting the fiber texture and closing the resin injection mold at the end of winding by means of the improved holding device in accordance with the invention will now be described. The impregnation of the fiber texture can be carried out by the injection molding processes called RTM (Resin Transfer Molding) or by flexible injection called Polyflex^{™}.

In Figure 2A, the fiber texture is at the end of winding, the fifth and last layer 22A, in a final winding turn of the fiber texture on the impregnation mandrel 16, winding on the fourth layer 22B by defining an end-of-winding position 30 at the terminal end of the latter layer. Beforehand, to promote the adhesion of the last layer 22A on the penultimate layer 22B, a tackifier will have been advantageously sprayed on this penultimate layer. By actuating the cranks, the different front clamping blocks 180, 200 of the holding device are then lowered to hold the fiber texture during cutting, which has the consequence of bearing the heating pads 24 against the fiber texture 22.

Optionally and in order to immobilize this end of winding a little more, a thin layer of the impregnation resin (it is the same resin which will then be injected into the mold once closed) can be applied on the fiber texture 22 before the bearing of the clamping blocks 180, 200, 202 and the heating of the fiber texture by the heating pads 24. The percentage of the applied impregnation resin may represent less than 3% of the total impregnation resin injected into the mold. This thin layer of resin can be deposited automatically by spraying by means of a spraying module or sprayer 28 or manually by simple whitewash.

This spraying is particularly interesting in the case of the Polyflex^{™} molding process because the curing of the resin avoids any detachment and unwinding during the installation of the compaction membrane (necessary to maintain the pressure of the resin, it transmits the forces applied by a fluid present on the other side of the membrane) which is made with the holding device removed.

In this position and as illustrated Figure 2B, the last layer 22A of the fiber texture is cut at the end-of-winding position 30 and the heating of the pads 24 is activated, for example via a dedicated electrical connection 26, causing, more particularly at the last two winding turns, a polymerization of the tackifier and/or of the applied resin, such as to ensure perfect drying of the fiber texture thus compacted.

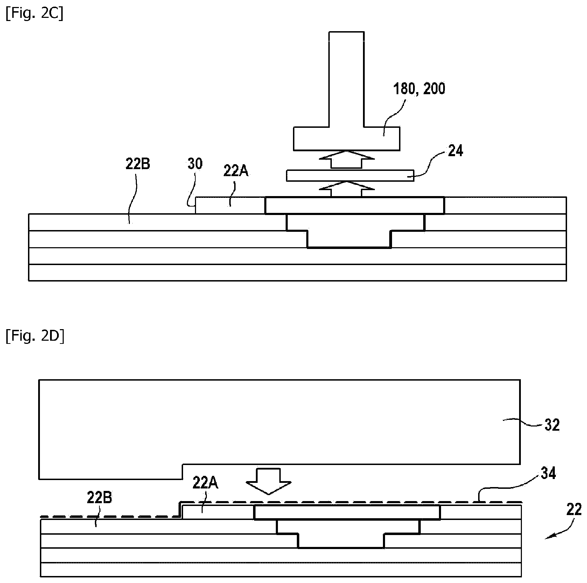

In a following step illustrated in Figure 2C, the blocks can be raised and the removed heating pads leaving a perfectly fixed fiber texture and whose end-of-winding position 30 of the last layer 22A has not moved, unlike the previous methods of the prior art where a slip from this position occurs even in the presence of tackifier between the last layers.

In a last step illustrated in Figure 2D, the mold can then be closed and the resin injection can be performed. No cavity likely to create a resin-rich area then appears in the thus closed mold.

This closure can be preceded by the installation of the compaction membrane 34 used in the case of the Polyflex^{™} molding process. This membrane must of course be laid with care to avoid any detachment and partial unwinding of the fiber texture.

It will be noted that if reference has been made to a heating pad pressed against the fiber texture by the clamping blocks, it can also be envisaged that heating pads 24 and front clamping blocks 180, 200 form one and the same part using front clamping blocks with heating beads.

## Claims

1. A method for injecting an impregnation resin for the manufacture of a revolution part made of composite material wherein several clamping blocks (180, 200, 202) are bearing on a fiber texture (22) wound on an impregnation mandrel forming an injection mold (16) for its holding during the cutting of the last layer (22A) of the fiber texture in an end-of-winding position (30), wherein the fiber texture is heated before the removal of the clamping blocks and the closing of the mold to inject the impregnation resin therein, and **characterized in that** the closing of the mold is preceded by the installation of a compaction membrane (34).

2. The method according to claim 1, **characterized in that** a thin layer of the impregnation resin is applied on the fiber texture (22) before the bearing of the clamping blocks (180, 200, 202) and the heating of the fiber texture.

3. The method according to claim 2, **characterized in that** the thin layer of the impregnation resin is applied by spraying or whitewash.

4. The method according to claim 2, **characterized in that** the percentage of applied impregnation resin represents less than 3% of the total of the impregnation resin injected into the mold.

5. A device (10) for holding a fiber texture on an impregnation mandrel forming an injection mold (16), comprising:
a cross-member (12) forming a support, each end of which is intended to be fastened on one of the side flanges of the impregnation mandrel;
at least one central block holder (18) mounted on the cross-member and provided with a front clamping block (180) and at least one side block holder (20) mounted on the cross-member and provided with at least one side clamping block (202); **characterized in that** it further comprises:
a heating pad (24) interposed between each front clamping block (180, 200) and the layer of fiber texture wound on the impregnation mandrel;
means for exerting a clamping force of the front clamping blocks on the layer of fiber texture wound on the impregnation mandrel via the heating pads (24); and
a compaction membrane (34) disposed on the layer of fiber texture before the closing of the mold.

6. The device according to claim 5, **characterized in that** it further comprises a spraying module (28) intended to spray a thin layer of the impregnation resin onto the fiber texture (22), before the bearing of the clamping blocks (180, 200, 202) and the heating of the fiber texture by the heating pads (24).

7. The device according to claim 5 or 6, **characterized in that** the heating pads (24) and the front clamping blocks (180, 200) form one and the same part.

8. A machine for winding a fiber texture on an impregnation mandrel, comprising:
an impregnation mandrel (16) on which the fiber texture (22) stored on a storage mandrel is intended to be wound in superimposed layers; and
at least one device for holding (10) the fiber texture on the impregnation mandrel according to any one of claims 5 to 7.

## Patentansprüche

1. Verfahren zum Einspritzen eines Imprägnierharzes für die Herstellung eines aus Verbundmaterial hergestellten Rotationsteils, wobei mehrere Klemmblöcke (180, 200, 202) an einer Fasertextur (22) anliegen, die auf einen Imprägnierdorn aufgewickelt ist, der ein Spritzgieß-Formwerkzeug (16) für deren Festhalten während des Schneidens der letzten Lage (22A) der Fasertextur in einer Wicklungs-Endposition (30) bildet, wobei die Fasertextur vor der Entfernung der Klemmblöcke und dem Schließen des Formwerkzeugs, um das Imprägnierharz darin einzuspritzen, erwärmt wird, und **dadurch gekennzeichnet, dass** dem Schließen des Formwerkzeugs der Einbau einer Verdichtungsmembran (34) vorausgeht.

2. Verfahren nach Anspruch 1, **dadurch gekennzeichnet, dass** vor dem Anlegen der Klemmblöcke (180, 200, 202) und der Erwärmung der Fasertextur eine dünne Schicht des Imprägnierharzes auf die Fasertextur (22) aufgebracht wird.

3. Verfahren nach Anspruch 2, **dadurch gekennzeichnet, dass** die dünne Schicht des Imprägnierharzes durch Sprühen oder Anstreichen aufgebracht wird.

4. Verfahren nach Anspruch 2, **dadurch gekennzeichnet, dass** der Prozentsatz des aufgebrachten Imprägnierharzes weniger als 3 % der Gesamtheit des in das Formwerkzeug eingespritzten Imprägnierharzes darstellt.

5. Vorrichtung (10) zum Halten einer Fasertextur an einem Imprägnierdorn, der ein Spritzgieß-Formwerkzeug (16) bildet, wobei die Vorrichtung umfasst:
eine Querstrebe (12), die eine Stütze bildet, wobei jedes Ende davon dazu bestimmt ist, an einer Seite der Seitenflansche des Imprägnierdorns befestigt zu werden,
zumindest einen zentralen Blockhalter (18), der an der Querstrebe montiert und mit einem vorderen Klemmblock (180) versehen ist, und zumindest einen seitlichen Blockhalter (20), der an der Querstrebe montiert und mit zumindest einem seitlichen Klemmblock (202) versehen ist, **dadurch gekennzeichnet, dass** sie ferner umfasst:
ein Heizkissen (24), das zwischen jeden vorderen Klemmblock (180, 200) und der Schicht der Fasertextur, die auf den Imprägnierdorn aufgewickelt ist, eingebracht ist, Mittel zum Ausüben einer Klemmkraft der vorderen Klemmblöcke auf die Schicht der Fasertextur, die auf den Imprägnierdorn aufgewickelt ist, mittels der Heizkissen (24), und
eine Verdichtungsmembran (34), die auf der Schicht der Fasertextur vor dem Schließen des Formwerkzeugs angeordnet wird.

6. Vorrichtung nach Anspruch 5, **dadurch gekennzeichnet, dass** sie ferner ein Sprühmodul (28) umfasst, das dazu vorgesehen ist, vor dem Anlegen der Klemmblöcke (180, 200, 202) und der Erwärmung der Fasertextur durch die Heizkissen (24) eine dünne Schicht des Imprägnierharzes auf die Fasertextur (22) zu sprühen.

7. Vorrichtung nach Anspruch 5 oder 6, **dadurch gekennzeichnet, dass** die Heizkissen (24) und die vorderen Klemmblöcke (180, 200) ein und denselben Teil bilden.

8. Maschine zum Aufwickeln einer Fasertextur auf einen Imprägnierdorn, umfassend:
einen Imprägnierdorn (16), auf welchen die Fasertextur (22), die auf einem Lagerdorn gelagert ist, in übereinander gelagerten Schichten aufgewickelt werden soll, und
zumindest eine Vorrichtung zum Halten (10) der Fasertextur auf dem Imprägnierdorn nach einem der Ansprüche 5 bis 7.

## Revendications

1. Procédé d'injection d'une résine d'imprégnation pour la fabrication d'une pièce de révolution réalisée en un matériau composite, dans lequel plusieurs blocs de serrage (180, 200, 202) sont en appui sur une texture fibreuse (22) enroulée sur un mandrin d'imprégnation formant un moule d'injection (16) pour son maintien pendant la découpe de la dernière couche (22A) de la texture fibreuse dans une position de fin d'enroulement (30), dans lequel la texture fibreuse est chauffée avant le retrait des blocs de serrage et la fermeture du moule pour y injecter la résine d'imprégnation, et **caractérisé en ce que** la fermeture du moule est précédée de la mise en place d'une membrane de compactage (34).

2. Procédé selon la revendication 1, **caractérisé en ce qu'**une fine couche de la résine d'imprégnation est appliquée sur la texture fibreuse (22) avant l'appui des blocs de serrage (180, 200, 202) et le chauffage de la texture fibreuse.

3. Procédé selon la revendication 2, **caractérisé en ce que** la fine couche de la résine d'imprégnation est appliquée par pulvérisation ou badigeonnage.

4. Procédé selon la revendication 2, **caractérisé en ce que** le pourcentage de résine d'imprégnation appliquée représente moins de 3 % de la résine d'imprégnation totale injectée dans le moule.

5. Dispositif (10) de maintien d'une texture fibreuse sur un mandrin d'imprégnation formant un moule d'injection (16), comprenant :
une traverse (12) formant un support dont chaque extrémité est destinée à être fixée sur l'un des flasques latéraux du mandrin d'imprégnation ;
au moins un porte-bloc central (18) monté sur la traverse et pourvu d'un bloc de serrage avant (180), et au moins un porte-bloc latéral (20) monté sur la traverse et pourvu d'au moins un bloc de serrage latéral (202) ; **caractérisé en ce qu'**il comprend en outre :
un patin chauffant (24) interposé entre chaque bloc de serrage avant (180, 200) et la couche de texture fibreuse enroulée sur le mandrin d'imprégnation ;
des moyens pour exercer une force de serrage des blocs de serrage avant sur la couche de texture fibreuse enroulée sur le mandrin d'imprégnation via les patins chauffants (24) ; et
une membrane de compactage (34) disposée sur la couche de texture fibreuse avant la fermeture du moule.

6. Dispositif selon la revendication 5, **caractérisé en ce qu'**il comprend en outre un module de pulvérisation (28) destiné à pulvériser une fine couche de la résine d'imprégnation sur la texture fibreuse (22), avant l'appui des blocs de serrage (180, 200, 202) et le chauffage de la texture fibreuse par les patins chauffants (24).

7. Dispositif selon la revendication 5 ou 6, **caractérisé en ce que** les patins chauffants (24) et les blocs de serrage avant (180, 200) forment une seule et même pièce.

8. Machine d'enroulement d'une texture fibreuse sur un mandrin d'imprégnation, comprenant :
un mandrin d'imprégnation (16) sur lequel la texture fibreuse (22) stockée sur un mandrin de stockage est destinée à être enroulée en couches superposées ; et
au moins un dispositif (10) de maintien de la texture fibreuse sur le mandrin d'imprégnation selon l'une des revendications 5 à 7.
